# EUROPÄISCHE PATENTSCHRIFT

(11) **EP 0 854 307 B1**
(45) Veröffentlichungstag und Bekanntmachung des Hinweises auf die Patenterteilung: **16.04.2003**
(21) Anmeldenummer: 98100617.4
(22) Anmeldetag: 15.01.1998
(51) Int. Cl.: F16J 15/36

(54) **Abdichtvorrichtung zwischen einem Laufrad und einem Gehäuse einer Pumpe mit einer Gleitringdichtung**
Sealing arrangement between the rotor and the housing of a pump comprising a mechanical seal
Agencement pour réaliser l'étanchéité entre le rotor et le corps d'une pompe comprenant une garniture mécanique d'étanchéité

(30) Priorität: 17.01.1997 DE 19701407
(43) Veröffentlichungstag der Anmeldung: 22.07.1998
(73) Patentinhaber: Miele & Cie. GmbH & Co., D-33332 Gütersloh (DE)
(72) Erfinder: Kraffzik, Hans-Jürgen, 33729 Bielefeld (DE)

(56) Entgegenhaltungen:
- DE-B- 1 074 342
- US-A- 2 866 656
- US-A- 3 291 492

## Beschreibung

Der Gegenstand der Erfindung betrifft eine Abdichtvorrichtung zwischen einem Laufrad einer Pumpe und einem Pumpengehäuse zum abdichten einer im Pumpengehäuse ausgebildeten Durchgangsbohrung, durch die eine Antriebswelle für das Laufrad hindurchgeführt ist, wobei die Abdichtvorrichtung eine Gleitring dichtung aufweist, mit einem elastischen am Pumpengehäuse befestigten und annähernd C-förmig ausgebildeten Balg, bestehend aus einem sich im radialen Abstand zur Antriebswelle axial erstreckenden und im Pumpengehäuse eingespannten zylindrischen Halteabschnitt, einer quer zur Antriebswelle verlaufenden Wand, sowie einer ebenfalls parallel zur Antriebswelle ausgerichteten einen Gleitring drehfest aufnehmenden Manschette an der quergestellten Balgwand und einer Tellerfeder im Balg, welche den Gleitring an die Dichtfläche des Laufrades andrückt, wobei der Gleitring die Antriebswelle für das Pumpenlaufrad aufnimmt und an einer Dichtfläche des Laufrades anliegt und die Tellerfeder sich mit ihrem Außenrand im Pumpengehäuse und mit dem Innenrand an einem Haltering abstützt, welcher auf der den Gleitring tragenden Manschette des Balges angeordnet ist.

Derartige Gleitringdichtungen, die sowohl bei Pumpen in wasserführenden Haushaltgeräten, in Kraftfahrzeugen usw. eingesetzt werden, verhindern, daß ein vom Laufrad zu förderndes Medium, in der Regel eine Flüssigkeit, auf die durch das Pumpengehäuse vom Laufrad getrennte Antriebsseite der Pumpe gelangt und zur Beschädigung oder Zerstörung der zumeist als Elektromotore ausgebildeten Antriebseinheit führt.

Die DE 32 22 759 A1 beschreibt beispielsweise eine Gleitringdichtung mit einem elastischen Balg, bei der als Federelement zum Andrücken des Gleitrings an die Dichtfläche des Laufrades eine Kegelfeder verwendet wird, die wenigstens drei Windungen aufweist. Aufgrund der dadurch in bezug auf die Wirkrichtung der Feder bedingten langen Abmessung der Gleitringdichtung treten beim Betrieb von Pumpen mit einer solchen Gleitringdichtung häufig sogenannte Stick-Slip-Effekte auf, d. h. Geräusche in Form eines Pfeifens. Derartige Laufgeräusche der Pumpe entstehen durch das abwechselnde Auftreten von Gleit- und Haftreibung zwischen dem Gleitring der Gleitringdichtung und der Dichtfläche des Laufrades, insbesondere dann, wenn sich die den Gleitring aufnehmenden Balgwände bei Haftreibung verdrehen und Torsionsspannungen zusätzlich entstehen. Die entstehenden Geräusche haben zwar keinen direkten Einfluß auf die Funktion der Pumpe, führen aber dazu, daß der Qualitätseindruck, beispielsweise bei Haushaltgeräten, die eine Pumpe mit einer solchen Gleitringdichtung verwenden, geschmälert wird.

Auch ist es bei Gleitringdichtungen nicht mehr neu, flache Federelemente in Form von Tellerfedern einzusetzen (siehe beispielsweise US-A 2 866 656, US-A 3 291 492). Hierdurch ist es möglich, die Baulänge der Dichtung, insbesondere die des Balges, weicher den Gleitring trägt, zu verringern. Aus der US-A 3 291 492 ist eine gattungsgemäße Abdichtvorrichtung mit einer Gleitringdichtung bekannt, bei welcher durch den Einsatz einer Tellerfeder eine Baulängenreduzierung des Balges mit verringertem Torsionsverhalten erreicht werden kann. Es können die Torsionsschwingungen bei dem bekannten Technikstand jedoch infolge der Schrägstellung der quer zur Antriebswelle verlaufenden Balgwand nicht optimal beseitigt werden. Es treten somit störende Slip-Stick-Effekte auf. Das Auftreten dieser die unangenehmen Pumpengeräusche hervorrufenden Effekte wird bei der vorerwähnten US-Patentschrift 3 291 492 noch dadurch verstärkt, daß der Balg im Pumpengehäuse nur durch die ihm eigene Elastizität seines Materials innerhalb der Durchgangsbohrung im Pumpengehäuse gehalten bzw. festgesetzt ist. Durch Materialermüdung oder starke Wärme-Wechselbelastung insbesondere beim Einsatz in wasserführenden Geräten, z. B. Geschirrspülmaschinen, wo wechselweise warme und kalte Flüssigkeiten zu fördern sind, besteht das Problem, daß sich der Balg im Pumpengehäusesitz verdreht. Dadurch lässt auch die Dichtwirkung der Gleitringdichtung nach und es dringt unkontrollierbar Flüssigkeit in das Pumpengehäuse ein, wodurch der Antrieb Schaden nehmen kann. Da ferner der die Tellerfeder aufnehmende Balgraum zum Laufrad der Pumpe hin geöffnet ist, kann Förderflüssigkeit ungehindert in die Dichtung einspülen und das Material der Tellerfeder angreifen. Insbesondere aber verursacht eine nicht drehlagegesicherte Dichtung Stick-Slip-Effekte, welche mit unangenehmen Pfeifgeräuschen der Pumpe einhergehen.

Aufgabe der Erfindung ist es daher, eine Abdichtvorrichtung mit einer Gleitringdichtung zu schaffen, mit der die Laufgeräusche während des Betriebs der Pumpe durch eine optimierte Festsetzung des Balges im Pumpengehäuse zuverlässig vermieden werden können und die zudem kostengünstig herstellbar ist.

Die Aufgabe wird erfindungsgemäß durch eine Abdichtvorrichtung nach Anspruch 1 gelöst. Weiterbildungen sind Gegenstand der abhängigen Ansprüche.

Gemäß der Erfindung wird als Federelement eine flache Tellerfeder verwendet, die im Vergleich zu den gemäß dem Stand der Technik verwendeten Kegelfedem oder Zylinderfedern eine in bezug auf die Wirkrichtung der Feder wesentlich kürzere Abmessung aufweist und als gezahnte oder ungezahnte Tellerfeder ausgebildet sein kann. Der Balg, der die Durchgangsbohrung im Pumpengehäuse abdichtet und in dem die Tellerfeder angeordnet ist, kann ebenfalls entsprechend kürzer ausgeführt werden. Dies hat einerseits den wesentlichen Vorteil, daß der drehfest mit dem Pumpengehäuse verbundene Balg verwindungssteifer ist, so daß eine auf den Gleitring wirkende und durch die Drehung des Laufrades bedingte Torsionskraft nicht zu einer Haftreibung zwischen dem Gleitring und dem Laufrad führt. Der Balg mit dem drehfest daran befestigten Gleitring verbleibt verwindungssteif in seiner Einbauposition, so daß während des Betriebes der Pumpe keine Haftreibung und entsprechend auch kein Geräusch in Form eines Pfeifens auftreten kann. Andererseits wird der Gleitring im wesentlichen nur durch die in Axialrichtung wirkende Kraft der Tellerfeder gegen die Dichtfläche des Laufrades gedrückt, weil die in Axialrichtung des Balges wirkende Kraft des Balges aufgrund der kurzen Abmessung gering ist. Dies hat den Vorteil, daß der Gleitring mit einer vorgegebenen, von den verschiedenen Materialien für den Gleitring und die Dichtfläche des Laufrades abhängigen Federkraft auf die Dichtfläche des Laufrades gedrückt wird, so daß eine gute Abdichtung und geringerer Verschleiß erreicht wird.

Die erfindungsgemäße Gleitringdichtung umfaßt einen im Querschnitt C-förmigen Balg mit einem zylindrischen, im radialen Abstand zur Antriebswelle axial in Richtung einer Antriebseinheit (Pumpenantriebsmotor) angeordneten Halteabschnitt und eine dem Laufrad der Pumpe zugewandte vertikale Balgwand. Die Wand ist mit einer zentrisch angeordneten Öffnung versehen, an die eine in den Balg vorspringende, die Öffnung verlängernde zylindrische Manschette angeformt ist. In der Öffnung ist der Gleitring für die Pumpen-Laufradachse angeordnet, der mit Hilfe eines die Manschette umgebenden Halte- oder Befestigungsringes drehfest mit dem Balg verbunden ist. Das Federelement stützt sich dabei am Haltering und an einer Abstützfläche, beispielsweise am Pumpengehäuse, so ab, daß der Gleitring mit einer vorgegebenen Kraft gegen die Dichtfläche des Laufrades gedrückt wird.

Nach einer anderen Ausführungsform der Gleitringdichtung gemäß der Erfindung ist eine Tellerfeder verwendet, bei welcher der Haltering als zylindrisches Basisteil der Feder mit dieser einstückig ausgebildet ist. Hierbei weist die Tellerfeder eine Anzahl von radial nach außen und schräg in Richtung der Abstützfläche am Pumpengehäuse verlaufende Lamellen auf, die von der Basis ausgehen. Die freien Enden der Lamellen als Außenrand der Tellerfeder stützen sich dabei an der Abstützfläche ab, während der zylindrische Halterabschnitt des C-förmig ausgebildeten Balges verdrehsicher am Pumpengehäuse festgesetzt ist.

Bei einer weiteren Ausführungsform der Gleitringdichtung gemäß der Erfindung weist der Balg einen radial nach innen verlaufenden, an das freie Ende des Halterabschnitts angeformten Rand auf, so daß sich der Außenrand der Tellerfeder an einem in Wirkrichtung der Tellerfeder vorspringenden Kranz abstützen kann, der an einem im Balg angeordneten Stützring ausgebildet ist. Auf diese Weise läßt sich die Gleitringdichtung auch dann verwenden, wenn das Pumpengehäuse aus Kostengründen einfacher zu gestalten ist, wie dies häufig bei Kleinserien vorkommt. Die Gleitringdichtung liegt dabei mit dem Rand ihres Balges an einer Schulter an, die beispielsweise leicht durch eine Durchgangsbohrung mit zwei verschiedenen Durchmessern realisiert werden kann. Der äußere Durchmesser der Durchgangsbohrung ist dann so groß gewählt ist, daß der zylindrische Halteabschnitt aufgenommen und drehfest im Pumpengehäuse vom Stützring angepreßt gehalten wird.

Im folgenden werden bevorzugte Ausführungsbeispiele der Erfindung anhand der Zeichnung näher erläutert:
- Figur 1: zeigt eine erfindungsgemäße Gleitringdichtung im Querschnitt,
- Figur 2: zeigt einen Querschnitt durch einen Teilbereich eine Trennwand eines Pumpengehäuses mit der eingebauten Gleitringdichtung,
- Fig 3: zeigt die Pumpengehäusetrennwand in der Draufsicht mit eingebauten Gleitringdichtung im Teilschnitt,
- Figur 4: zeigt ein als Tellerfeder ausgebildetes Federelement mit geschlossener, ungezahnter Federfläche,
- Figur 4a: ist die Seitenansicht des Federelements gemäß Fig. 4,
- Figur 4b: ist die geschnittene Seitenansicht des Federelements gemäß Fig. 4,
- Figur 5: zeigt ein als Tellerfeder ausgebildetes Federelement mit gezahnter Federfläche in Lamellenausbildung,
- Figur 5a: ist die geschnittene Seitenansicht des Federelements gemäß Fig. 5,
- Figur 6: einen Haltering der Gleitringdichtung als Gegenstütze für die Tellerfeder, im Querschnitt,
- Figur 7: zeigt ein weiteres Ausführungsbeispiel der erfindungsgemäßen Gleitringdichtung und Teilbereiche eines Pumpengehäuses, eines Laufrades und einer Antriebswelle im Querschnitt;
- Figur 8: ist eine Draufsicht auf ein verwendetes Tellerfederelement,
- Figur 9: ist ein Querschnitt durch das Federelement gemäß Figur 8,
- Figur 10: zeigt eine weitere Ausführungsform der Gleitringdichtung für ein Pumpengehäuse,
- Figur 11: ist eine Draufsicht auf einen bei der weiteren Ausführungsform gemäß Figur 10 verwendeten Stützring,
- Figur 12: zeigt einen Querschnitt durch den Stützring gemäß Figur 11.

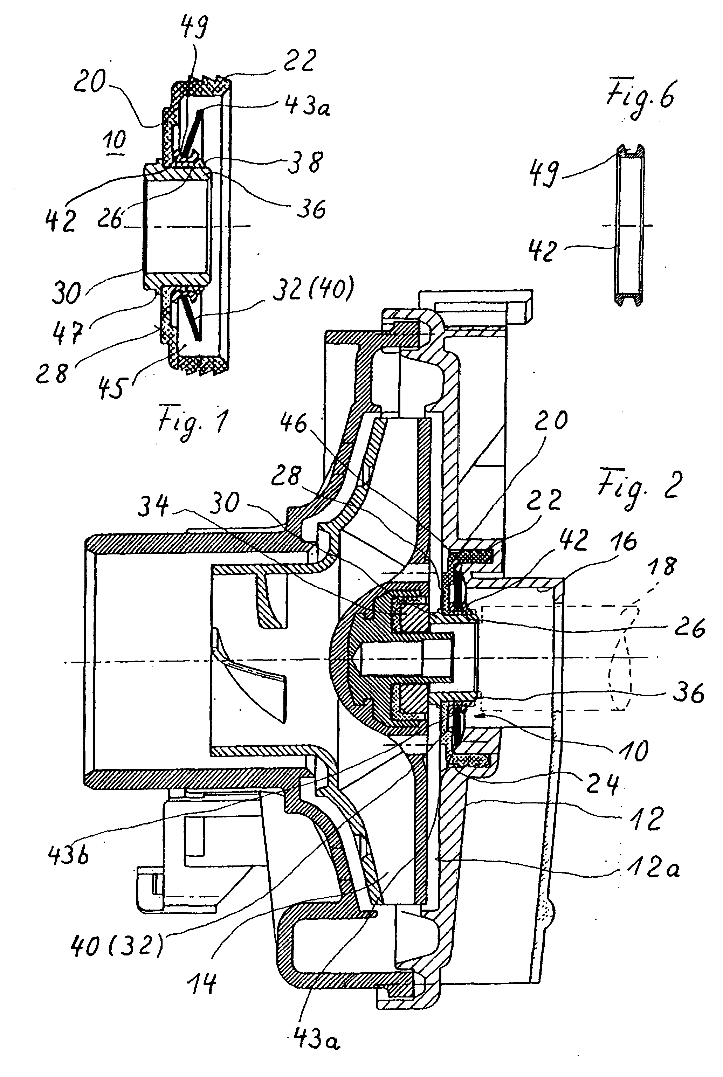

Die Figur 1 zeigt eine mit (10) bezeichnete Gleitringdichtung, die zwischen einem Pumpengehäuse (12) und einem Laufrad (14) einer Pumpe angeordnet ist, sh. auch Fig. 2, und eine im Pumpengehäuse ausgebildete Durchgangsbohrung (16), durch die eine Antriebswelle (18) für das Laufrad (14) hindurchgeführt ist, derart abdichtet, daß ein von der Pumpe zu förderndes Medium nicht auf die Antriebsseite der Pumpe gelangt und die nicht gezeigte Pumpenantriebseinheit, z. B. einen Elektromotor, beschädigt oder zerstört.

Die Gleitringdichtung (10) gemäß Fig. 1 umfaßt erfindungsgemäß einen im Querschnitt etwa C-förmigen elastischen Balg (20), der einen im radialen Abstand von der Antriebswelle (18) vorgesehenen zylindrischen Halteabschnitt (22) oder Kragen aufweist, der sich axial in Richtung der Antriebseinheit erstreckt und in eine um die Durchgangsbohrung (16) im Pumpengehäuse (12) oder Pumpentrennwand herum vorgesehene Ringnut (24) eintaucht und in dieser drehfest angeordnet oder eingeknöpft ist. Der Balg (20) weist ferner einen in einer zentrisch angeordneten Öffnung (26) in einer dem Laufrad zugewandten, zumindest annähernd vertikalen und geraden Wand (28) des Balges (20) vom Einspannpunkt des Halteabschnitts (22) ausgehend einen Gleitring (30) auf, durch den die Antriebswelle (18), Fig. 2, hindurchgeführt ist. Der Gleitring (30) kann bspw. aus aus Kohlewerkstoff gefertigt sein. Vorzugsweise ist die den Gleitring (30) tragende Wand (28) in der Ebene des Pumpengehäuses (12) bzw. einem Wandteil (12a) davon ausgerichtet. Hierdurch kann die Wand (28) des Balges (20) sehr kurz gebildet werden, wodurch diese sehr verdrehsteif wird.

Innerhalb des verdrehsteif im Pumpengehäuse eingespannten Balges (20) ist ein flaches Federelement (32) angeordnet. Das Federelement drückt den Gleitring (30) axial an eine Dichtfläche (34) an, die auf der dem Gleitring zugewandten Seite des Laufrades (14), sh. Fig. 2, vorgesehen ist. Diese Dichtfläche (34) als Gegenlager kann aus einem anderen Material, bspw. aus Keramik hergestellt werden; bzw. auch umgekehrt.

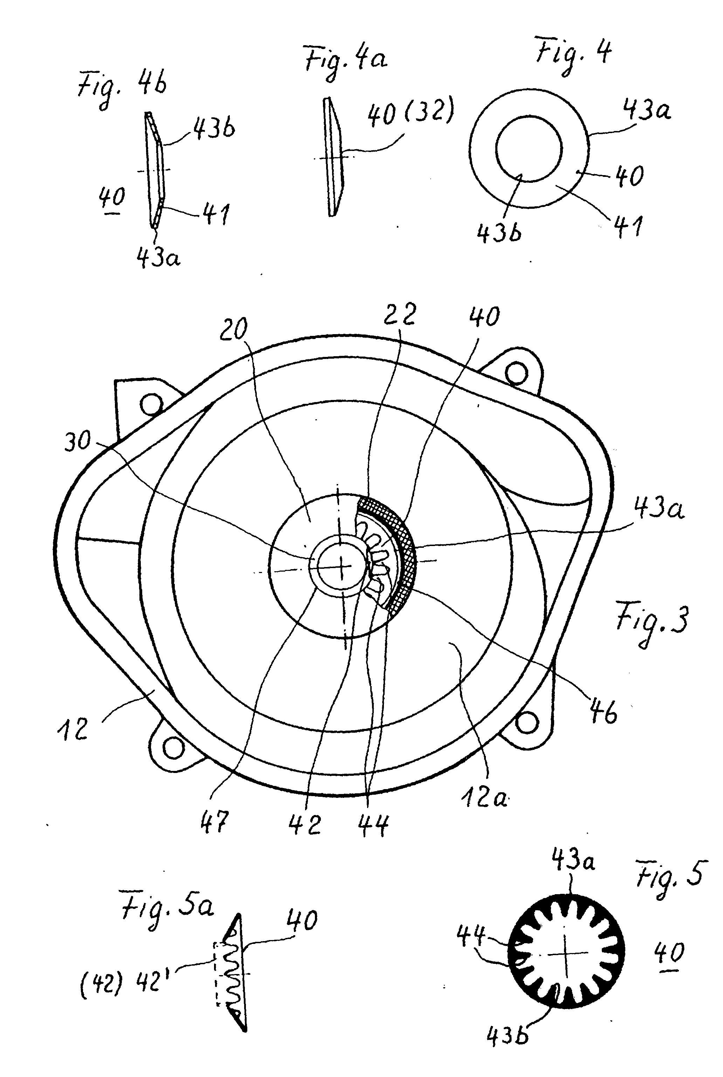

Gemäß der Erfindung ist als flaches Federelement eine ggf. herkömmliche (z. B. genormte) ungezahnte Tellerfeder (40) mit geschlossener ringförmiger Federfläche (41) nach Fig. 4, 4a, 4b, oder auch eine gezahnte durch eine Anzahl Lamellen (44) gestaltete Tellerfeder (40) gemäß Fig. 3, 5, 5a verwendet werden, die entsprechend einer vorgegebenen auch das Gleitringmaterial berücksichtigenden axialen Federkraft bemessen ist. Mit ihrem Außenrand (43a) stützt sich die Tellerfeder (40) dabei an einer Abstützfläche (46) oder Schulter im Pumpengehäuse (12; 12a) lose (verdrehbar) ab. Als Gegenstütze der Tellerfeder (40) dient dabei ein in den Balgraum (45) eintauchender zylindrischer Abschnitt (36), Fig. 1, des Gleitrings (30).

In der Ausbildung gemäß Fig. 5, 5a als gezahnte Tellerfeder (40) mit einer Anzahl von Lamellen (44) als Einzelfedern können die Lamellen entweder vom Außenrand (43a) der Tellerfeder (40) radial nach innen in Richtung Tellerfedermitte (Fig. 5) oder von einem den Gleitring (30) umgebenden Haltering (42), sh. auch Fig. 2, 3 und 6, radial nach außen in Richtung einer Abstützfläche (46), Fig. 2 u. 3, verlaufen. Dabei sind die Lamellen (44) zur Erzeugung der axialen Federkraft vorbestimmt schrägverlaufend ausgebildet, wie bei der ungespannten Tellerfeder (40) in Fig. 1 verdeutlicht ist. Gezahnte Tellerfedern (Fig. 3 und 5) mit Einzelfederelementen (Lamellen 44) sind dabei einfacher dem jeweiligen Einsatzfall hinsichtlich Kraftübertragung und Feinabstimmung anpaßbar als ungezahnte Tellerfedern (40) mit jeweils geschlossenen Ringfederflächen (41).

Der vorerwähnte zylindrische Abschnitt (36) ragt mit einem reduzierten Durchmesser in den Balgraum (45) hinein, wobei ein Gleitringabschnitt (47) mit einem größeren Durchmesser sich außen an der vertikalen Wand (28) abstützen kann. Der Balg (20) ist ferner mit einer axial in Richtung der Antriebseinheit ausgerichteten die Öffnung verlängernden, zylindrischen Manschette (38) gemäß Fig. 1 ausgebildet, welche außen eng am zylindrischen Abschnitt (36) des Gleitrings (30) anliegt. Die zylindrische Manschette (38) ist ist drehfest mit dem reduzierten Abschnitt (36) des Gleitringes (30) durch den schon genannte Haltering (42) verspannt, welcher die direkte Gegenstütze für das als Tellerfeder (40) ausgebildete Federelement (32) bildet.

Durch den vorzugsweise vollständig im Pumpengehäuse (12) in der Trennwand (12a) eingespannten zylindrischen Halteabschnitt (22) des elastischen Balges (20) wird der Balg mit der vertikalen Wand (28), deren Balgmaterial sich ohnehin aufgrund des vorzugsweisen geraden Wandverlaufs äußerst verdrehsicher verhält, zusätzlich versteift, also verwindungssteif gemacht. Es sind daher im Betrieb der Pumpe nur Wandauslenkungen in axialer Richtung möglich, wobei die gerade Wandfläche (28) mit dem eingespannten Gleitring (30) neben der Auslenkung in Achsrichtung auch eine gewisse Taumelbewegung zuläßt oder bewerkstelligen kann, wenn sich Einbautoleranzen des Gleitrings (30), des Laufrades (14) oder dergl. ergeben. Eine Verdrehung oder Torsion der senkrechten Balgwand (28) in dem Sinne, daß Haftreibungen und Slip-Stick-Geräusche auftreten, ist jedoch verhindert, da sich die drehfest eingespannte Wand (28) mit dem Gleitring (30), wie erwähnt, verwindungssteif verhält.

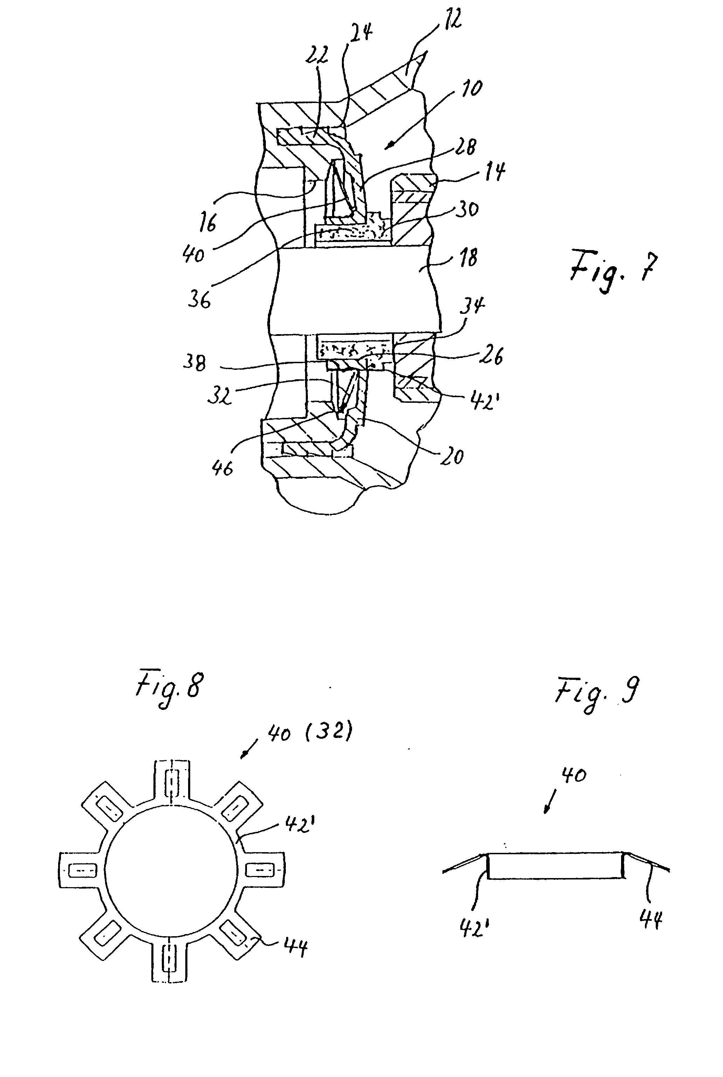

Der Haltering (42) ist nach dem ersten Ausführungsbeispiel gemäß Fig. 1 bis 3 der erfindungsgemäßen Gleitringdichtung (10) als separates Bauteil ausgebildet und vorzugsweise mit einer umlaufenden Ringnut (49), sh. Fig. 6, versehen, in welche die Federflächen (44, 41) der Tellerfeder (40) eingestellt sind. Dies können bei ungezahnter Tellerfeder (40) mit geschlossener Federringfläche (41) nach Fig. 4 der innere Rand (43b) der Tellerfeder (40) oder bei gezahnten Tellerfeder (40) die freien Enden der in Richtung Tellerfedermitte verlaufenden Lamellen (44) sein. Der Außenrand (43a) der Tellerfeder (40) liegt wie erwähnt an der Abstützfläche (Schulter 46) im Pumpengehäuse (12) an, so daß der Gleitring (30) im montierten Zustand mit der vorgegebenen Kraft des Federelements (32) gegen die Dichtfläche (34) des Laufrades (14) gedrückt wird.

Gemäß weiteren Ausführungsbeispiel (Fig. 7 bis 12 kann der Haltering (42) auch einstückig mit der Tellerfeder (40) ausgebildet werden und einen mittig angeordneten zylindrischen Basisteil (42') der Tellerfeder (40) bilden. In Fig. 5a ist diese Abwandlung bei einer Tellerfeder mit Lamellenform nur gestrichelt angedeutet. Hier ist der zylindrische Basisteil (42') bzw. der Haltering (42) an den Federenden der in Richtung Tellerfedermitte ausgerichteten Lamellen (44) angeformt.

Nach einer anderen Ausführung eines Federelements (32) in Lamellenausbildung wird eine in Figur 8 in der Draufsicht und in Figur 9 im Querschnitt gezeigte Tellerfeder (40) verwendet. Von der zylindrischen Basis (42') bzw. dem einstückig mit dem Federelement ausgebildeten Haltering (42) gehen eine Anzahl von schräg und radial nach außen verlaufende Lamellen (44) aus, deren freie Enden an der zwischen der Durchgangsbohrung (16) und der Ringnut (24) im Pumpengehäuse (12) ausgebildeten Schulter (46) als Abstützfläche anliegen, während die zylindische Basis (42' bzw. 42) der Tellerfeder (40) als Gegenlager die zylindrische Manschette (38) des Balges (20) umgibt und den Gleitring gemäß Fig. 7 drehfest mit dem Balg (20) verbindet. Die Lamellen (44) stützen sich im eingebauten Zustand der Gleitringdichtung (10) an der Schulter (46) ab, so daß der Gleitring mit der Stirnfläche gegen die Dichtfläche (34) des Laufrades (14) gedrückt wird und das Laufrad gegen die Gleitringdichtung (10) abgedichtet ist.

Auch bei dieser Ausführung ist die Abstützfläche (46) für den Außenrand (43a) der Tellerfeder (40) direkt am Pumpengehäuse (12) ausgebildet. Es besteht jedoch auch die Möglichkeit, zur Abstützung des äußeren Tellerfederrandes ein separates Bauteil (Stützring 50) innerhalb des Balges (20) vorzusehen, wie nachstehend näher ausgeführt ist. Die Figuren 10 bis 12 zeigen diese Ausführungsform einer Gleitringdichtung (10). Es soll in diesem Zusammenhang nur der von den vorerwähnten Ausführungsformen abweichende Aufbau erläutert werden.

Der Balg (20) weist im wesentlichen die gleiche Bauform auf, wie bei den Ausführungsform gemäß Fig. 2, 3 und 7; jedoch mit der Ausnahme, daß sich an das freie Ende des zylindrischen Halteabschnitts (22) ein radial nach innen verlaufender Rand (48) anschließt, so daß ein im Balg angeordneter, vorzugsweise aus Kunststoff bestehender Stützring (50) als separates Abstützmittel im Balg gehalten wird. Bei diesem Ausführungsbeispiel liegen die Lamellen (44) der Tellerfeder (40) am Stützring (50) an.

Wie die Fig. 10 weiterhin zu erkennen gibt, weist das Pumpengehäuse (12) hier aber keine Ringnut (49) für den von der vertikalen Wand (28) des Balges (20) abgewinkelten Halteabschnitt (22) auf. Statt dessen liegt der Rand (48) des Halteabschnitts (22) an einer Schulter (52) des Pumpengehäuses (12) an, die beispielsweise leicht durch eine Durchgangsbohrung (16) mit zwei verschiedenen Durchmessern gebildet werden kann. Der äußere Durchmesser der Durchgangsbohrung ist derart groß gewählt, daß der zylindrische Halteabschnitt (22) des Balges (20) möglichst vollständig aufgenommen und drehfest gehalten wird. Auf diese Weise läßt sich die Gleitringdichtung (10) beispielsweise auch bei Kleinserien von Pumpen verwenden, da die Aufnahme für die Gleitringdichtung (10) zur Kostenreduzierung einfacher gestaltet ist.

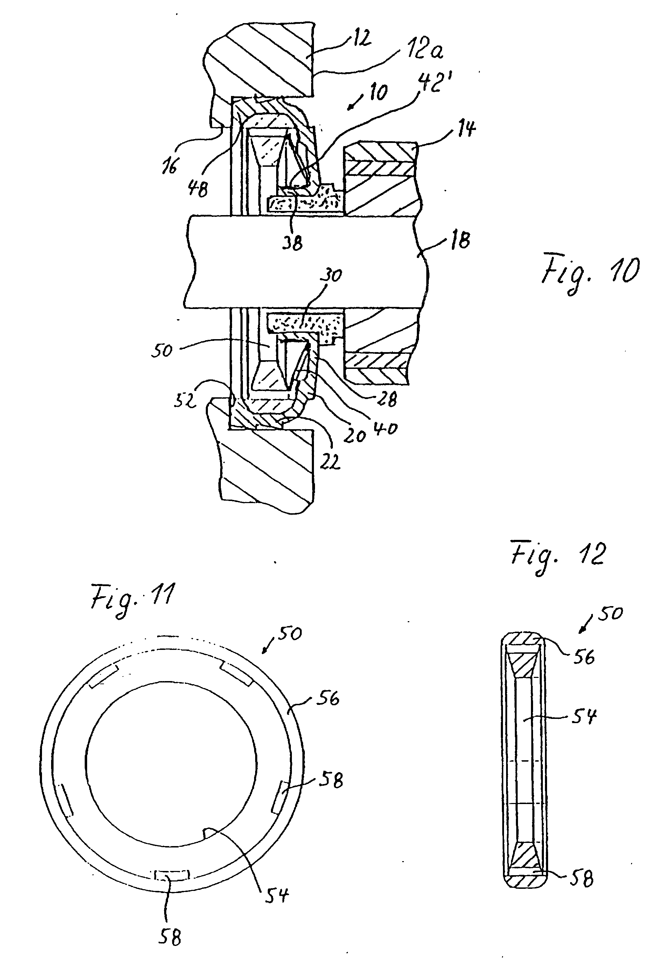

Die Figuren 11 und 12 zeigen den Stützring (50), der eine Öffnung (54) aufweist, durch welche die Antriebswelle (18) für das Laufrad (14) hindurchgeführt ist. Der Stützring weist am Rand einen in beide Richtungen vorspringenden Kranz (56) auf, dessen Durchmesser auf den Durchmesser der Tellerfeder abgestimmt ist, so daß sich die freien Enden der Lamellen (44) am Kranz abstützen können. Der Stützring (50) weist ferner eine Anzahl von Durchbrüchen (58) auf, durch die ein die Gleitringdichtung eindringendes Medium (Leckwasser) abgeleitet werden kann.

Aufgrund der in bezug auf die Wirkrichtung der Tellerfeder (40) geringen Abmessungen und der damit möglichen kurzen Ausführungen des Balges (20), zumal dessen Balgwände noch abgewinkelt wenigstens annähernd C-förmig gerade gestaltet sind, ist dieser, trotz des für die Herstellung verwendeten elastomeren Kunststoffs, verwindungsssteifer als Bälge nach dem Stand der Technik, so daß die auf den drehfest am Balg (20) befestigten Gleitring (30) wirkende Torsionskraft des umlaufenden Pumpenlaufrades nicht dazu führt, daß der Balg aufgrund von Haftreibung vom Laufrad (14) mitgerissen wird. Auf diese Weise können während des Betriebs der Pumpe keine sogenannten Stick-Slip-Effekte auftreten. Zwischen dem Gleitring (30) und der Dichtfläche (34) besteht nur noch Gleitreibung, die kein Pfeifen erzeugen kann. Der elastische Balg (20) ist verwindungssteif am Pumpengehäuse (12) gehalten bzw. eingespannt und durch seine kurze Bauform auch ausgebildet, wie die am Halteabschnitt 22 abgewinkelte Wand 28 auch zeigt.

Andererseits wird der Gleitring (30) im wesentlichen nur durch die in Axialrichtung wirkende Kraft der Tellerfeder (40) gegen die Dichtfläche des Laufrades (14) gedrückt, weil die in Axialrichtung des Balges (20) wirkende Kraft des Balges aufgrund der kurzen Abmessung gering ist. Dies hat den Vorteil, daß der Gleitring (30) mit einer vorberechenbaren, von den verschiedenen Materialien für den Gleitring (30) und die Dichtfläche des Laufrades abhängig eingestellten Federkraft auf die Dichtfläche (34) des Laufrades (14) gedrückt wird. Hierdurch wird die Abdichtung verbessert und der Verschleiß der Dichtung gering gehalten. Die Tellerfeder (40) kann sowohl eine lineare als auch eine progressive oder degressive Federkennlinie aufweisen.

## Patentansprüche

1. Abdichtvorrichtung zwischen einem Laufrad (14) einer Pumpe und einem Pumpengehäuse (12) zum abdichten einer im Pumpengehäuse ausgebildeten Durchgangsbohrung (16) durch die eine Antriebswelle (18) für das Laufrad (14) hindurchgeführt ist, wobei die Abdichtvorrichtung eine Gleitringdichtung aufweist, mit einem elastischen am Pumpengehäuse (12) befestigten und annähernd C-förmig ausgebildeten Balg (20), bestehend aus einem sich im radialen Abstand zur Antriebswelle axial erstreckenden und im Pumpengehäuse eingespannten zylindrischen Halteabschnitt (22), einer quer zur Antriebswelle verlaufenden Wand (28), sowie einer ebenfalls parallel zur Antriebswelle ausgerichteten einen Gleitring drehfest aufnehmende Manschette (38) an der quergestellten Balgwand (28) und einer Tellerfeder (32, 40) im Balg (20), welche den Gleitring (30) an die Dichtfläche des Laufrades (14) andrückt, wobei der Gleitring (30) die Antriebswelle (18) für das Pumpenlaufrad (14) aufnimmt und an einer Dichtfläche des Laufrades anliegt und die Tellerfeder (32) sich mit ihrem Außenrand im Pumpengehäuse (12) und mit dem Innenrand an einem Haltering (42) abstützt, welcher auf der den Gleitring (30) tragenden Manschette (38) des Balges (20) angeordnet ist,
**dadurch gekennzeichnet,**
**dass** der C-förmige Balg (20) mit einem dem Laufrad (14) abgekehrten Balgraum (45) verdrehsteif im Pumpengehäuse (12) festgesetzt ist, wofür einerseits der zylindrische Halteabschnitt (22) des Balges (20) sich in Richtung des Pumpenantriebs erstreckt und in einer Ringnut (24) des Pumpengehäuses (12) oder zwischen einem separaten Stützring (50) und der Durchgangsbohrung (16) drehfest eingespannt ist, und andererseits die quer zur Antriebswelle (18) verlaufende Wand (28) des Balges (20) mit der ebenfalls sich in Richtung des Pumpenantriebs erstreckenden Manschette (38) vertikal und gerade von der Einspannstelle des zylindrischen Halteabschnitts (22) abbiegt und annähernd in der Ebene des Pumpengehäuses (12) verläuft, und wobei die Abstützfläche (46) für den Außenrand (43a) der am Haltering (42; 42') abgestützten Tellerfeder (40) separat vom Balg (20) als Schulter am Pumpengehäuse (12) unterhalb der Ringnut (24) oder an dem separaten Stützring (50) ausgebildet ist, und dass die den Gleitring (30) andrückende Tellerfeder (40) gezahnt oder ungezahnt ist,

2. Abdichtvorrichtung nach Anspruch 1,
**dadurch gekennzeichnet,**
**dass** sich die Tellerfeder (40) mit ihrem Außenrand (43a) an der Abstützfläche (46) lose anliegend abstützt und dass der Gleitring (30) mit einem in den Balgraum (45) eintauchenden, zylindrischen Abschnitt (36) ausgebildet und der Haltering (42; 42') als Gegenstütze für die Tellerfeder (40) auf dem zylindrischen Abschnitt (36) mit dem Balg (20) drehfest verspannt ist.

3. Abdichtvorrichtung nach Anspruch 1 und 2,
**dadurch gekennzeichnet,**
**dass** der Haltering (42; 42') einstückig mit der Tellerfeder (40) verbunden und als deren mittig angeordnete zylindrische Basis (42') ausgebildet ist.

4. Abdichtvorrichtung nach einem oder mehreren der Ansprüche 1 bis 3,
**dadurch gekennzeichnet,**
**dass** der Haltering (42; 42') für die Tellerfeder (40) als separates Bauteil ausgebildet ist.

5. Abdichtvorrichtung nach einem oder mehreren der Ansprüche 1 bis 4,
**dadurch gekennzeichnet,**
**dass** der Haltering (42; 42') vorzugsweise mit einer umlaufenden Ringnut (49) ausgebildet ist, in welche die Federflächen (41; 44) der Tellerfeder (40) eingestellt sind.

6. Abdichtvorrichtung nach einem oder mehreren der Ansprüche 1 bis 5,
**dadurch gekennzeichnet,**
**dass** das Federelement (32) in der Ausbildung als gezahnte Tellerfeder (40) eine Anzahl von Lamellen (44) aufweist, die vom Außenrand (43a) der Tellerfeder (40) in Richtung Tellerfedermitte oder von dem den Gleitring (30) umgebenden Haltering (42; 42') radial nach außen in Richtung der Abstützfläche (46; 50) verlaufen, wobei die Lamellen (44) schrägverlaufend ausgebildet sind.

7. Abdichtvorrichtung nach einem oder mehreren der Ansprüche 1 bis 6,
**dadurch gekennzeichnet,**
**dass** die Enden der Lamellen (44) bei in Richtung Tellerfedermitte verlaufenden Lamellen (44) in den Haltering (42; 42') lose eingestellt oder mit diesem einstückig verbunden sind.

8. Abdichtvorrichtung nach einem oder mehreren der Ansprüche 1 bis 7,
**dadurch gekennzeichnet,**
**dass** die Lamellenenden bei radial nach außen verlaufenden Lamellen (44) den Außenrand (43a) der Tellerfeder (40) bilden und an der Abstützfläche (46; 50) anliegen.

9. Abdichtvorrichtung nach einem oder mehreren der Ansprüche 1 bis 8,
**dadurch gekennzeichnet,**
**dass** der Balg (20) einen radial nach innen verlaufenden, an das freie Ende des Halterabschnitts (22) angeformten Rand (48) aufweist, welcher den Stützring (50) fest hält

10. Abdichtvorrichtung nach einem oder mehreren der Ansprüche 1 bis 9,
**dadurch gekennzeichnet,**
**dass** sich die freien Enden der Lamellen (44) an einem in Wirkrichtung der Tellerfeder (40) vorspringende Kranz (56) abstützen, der an einem im Balg (20) angeordneten Stützring (50) ausgebildet ist.

11. Abdichtvorrichtung nach einem oder mehreren der Ansprüche 1 bis 10,
**dadurch gekennzeichnet,**
**dass** der Stützring (50) aus Kunststoff besteht.

12. Abdichtvorrichtung nach einem oder mehreren der Ansprüche 1 bis 11,
**dadurch gekennzeichnet,**
**dass** der Gleitring (30) zylindrisch ausgebildet ist und der in den Balgraum (45) eintauchende Abschnitt (36) des Gleitringes (30) einen reduzierten Durchmesser aufweist derart, dass der Abschnitt mit dem größeren Durchmesser von außen an der Öffnung (26) in der senkrechten Balgwand (28) anliegt, wobei die axial in Richtung des Pumpenantriebs gerichtete und die Öffnung (26) verlängernde zylindrische Manschette (38) des Balges (20) eng am reduzierten Abschnitt (36) des Gleitringes (30) anliegt und der Haltering (42; 42') als Gegenstütze des Federelements (32) die Manschette (38) drehfest umgibt.

13. Abdichtvorrichtung nach einem oder mehreren der Ansprüche 1 bis 12
**dadurch gekennzeichnet,**
**dass** der Balg (20) aus einem elastomeren Kunststoff besteht.

14. Abdichtvorrichtung nach einem oder mehreren der Ansprüche 1 bis 13
**dadurch gekennzeichnet,**
**dass** die Tellerfeder (40) eine lineare, progressive oder degressive Federkennlinie aufweist.

## Claims

1. Sealing apparatus between an impeller (14) of a pump and a pump housing (12) for sealing a through-bore (16), which is provided in the pump housing, and through which a drive shaft (18) for driving the impeller (14) extends, the sealing apparatus having a slide ring seal with a resilient bellows (20), which is mounted on the pump housing (12) and is approximately C-shaped, said bellows comprising a cylindrical retaining portion (22), which extends axially in the radial spacing from the drive shaft and is clamped in position in the pump housing, a wall (28) which extends transversely relative to the drive shaft, and a sleeve (38) which is also orientated parallel to the drive shaft and non-rotatably accommodates a slide ring, on the transverse bellows wall (28), and a plate spring (32, 40) in the bellows (20), which spring urges the slide ring (30) against the sealing face of the impeller (14), the slide ring (30) accommodating the drive shaft (18) for the pump impeller (14) and abutting against a sealing face of the impeller, and the plate spring (32) being supported with its external edge in the pump housing (12) and with the internal edge on a retaining ring (42), which is disposed on the sleeve (38) of the bellows (20) carrying the slide ring (30), **characterised in that** the C-shaped bellows (20), having a bellows chamber (45) remote from the impeller (14), is fixed in the pump housing (12) in a non-rotatable manner, wherefor, on the one hand, the cylindrical retaining portion (22) of the bellows (20) extends in the direction of the pump drive and is non-rotatably clamped in position in an annular groove (24) of the pump housing (12) or between a separate supporting ring (50) and the through-bore (16), and, on the other hand, the wall (28) of the bellows (20), extending transversely relative to the drive shaft (18), bends-down with the sleeve (38), which also extends in the direction of the pump drive, vertically and rectilinearly from the clamped-in point of the cylindrical retaining portion (22) and extends approximately in the plane of the pump housing (12), and the supporting face (46) for supporting the external edge (43a) of the plate spring (40), which is supported on the retaining ring (42; 42'), being provided separately from the bellows (20) as a shoulder on the pump housing (12) beneath the annular groove (24) or on the separate supporting ring (50), and **in that** the plate spring (40), which presses on the slide ring (30), is toothed or non-toothed.

2. Sealing apparatus according to claim 1, **characterised in that** the plate spring (40) is supported with its external edge (43a) abutting loosely against the supporting face (46), and **in that** the slide ring (30) is provided with a cylindrical portion (36), which extends into the bellows chamber (45), and the retaining ring (42, 42') is non-rotatably clamped to the bellows (20) as the countersupport for the plate spring (40) on the cylindrical portion (36).

3. Sealing apparatus according to claims 1 and 2, **characterised in that** the retaining ring (42; 42') is integrally connected to the plate spring (40) and is in the form of the centrally disposed, cylindrical base (42') thereof.

4. Sealing apparatus according to one or more of claims 1 to 3, **characterised in that** the retaining ring (42; 42') for retaining the plate spring (40) is in the form of a separate structural member.

5. Sealing apparatus according to one or more of claims 1 to 4, **characterised in that** the retaining ring (42; 42') is preferably provided with a circumferential annular groove (49), into which the spring faces (41; 44) of the plate spring (40) are inserted.

6. Sealing apparatus according to one or more of claims 1 to 5, **characterised in that**, in the embodiment as a toothed plate spring (40), the spring member (32) has a number of vanes (44) which extend from the external edge (43a) of the plate spring (40) in the direction of the centre of the plate spring or extend from the retaining ring (42; 42'), which surrounds the slide ring (30), radially outwardly in the direction of the supporting face (46; 50), the vanes (44) extending inclinedly.

7. Sealing apparatus according to one or more of claims 1 to 6, **characterised in that**, in the case where the vanes (44) extend in the direction of the centre of the plate spring, the ends of the vanes (44) are loosely inserted into the retaining ring (42; 42') of are integrally connected thereto.

8. Sealing apparatus according to one or more of claims 1 to 7, **characterised in that**, in the case where the vanes (44) extend radially outwardly, the vane ends form the external edge (43a) of the plate spring (40) and abut against the supporting face (46; 50).

9. Sealing apparatus according to one or more of claims 1 to 8, **characterised in that** the bellows (20) has a radially inwardly extending edge (48), which is shaped to fit on the free end of the retaining portion (22) and securedly retains the supporting ring (50).

10. Sealing apparatus according to one or more of claims 1 to 9, **characterised in that** the free ends of the vanes (44) are supported on a rim (56), which protrudes when viewed with respect to the operative direction of the plate spring (40) and is provided on a supporting ring (50) disposed in the bellows (20).

11. Sealing apparatus according to one or more of claims 1 to 10, **characterised in that** the supporting ring (50) is formed from plastics material.

12. Sealing apparatus according to one or more of claims 1 to 11, **characterised in that** the slide ring (30) is cylindrical, and the portion (36) of the slide ring (30), extending into the bellows chamber (45), has a reduced diameter in such a manner that the portion having the greater diameter abuts from externally against the aperture (26) in the vertical bellows wall (28), the cylindrical sleeve (38) of the bellows (20) being axially orientated in the direction of the pump drive and extending the aperture (26), and said sleeve closely abuts against the reduced portion (36) of the slide ring (30), and the retaining ring (42; 42') non-rotatably surrounds the sleeve (38) as a countersupport of the spring member (32).

13. Sealing apparatus according to one or more of claims 1 to 12, **characterised in that** the bellows (20) is formed from an elastomeric plastics material.

14. Sealing apparatus according to one or more of claims 1 to 13, **characterised in that** the plate spring (40) has a linear, progressive or degressive spring characteristic curve.

## Revendications

1. Dispositif d'étanchéité entre un rotor (14) d'une pompe et un carter de pompe (12) pour étancher un perçage de passage (16) réalisé dans le carter de pompe, à travers lequel passe un arbre d'entraînement (18) pour le rotor (14), sachant que le dispositif d'étanchéité comprend une garniture mécanique d'étanchéité dotée d'un soufflet élastique (20) approximativement en forme de C et fixé au carter de pompe (12), qui est composée d'un segment de fixation (22) cylindrique s'étendant de façon axiale dans l'écart radial par rapport à l'arbre d'entraînement et immobilisé dans le carter de pompe, d'une paroi (28) s'étendant transversalement à l'arbre d'entraînement, ainsi que d'une manchette (38) également orientée parallèlement à l'arbre d'entraînement et immobilisant une bague de glissement pour l'empêcher de tourner, qui est située sur la paroi transversale (28) du soufflet, et d'une rondelle-ressort (32, 40) dans le soufflet (20) qui appuie la bague de glissement (30) contre la surface d'étanchéité du rotor (14), sachant que la bague de glissement (30) reçoit l'arbre d'entraînement (18) pour le rotor de pompe (14) et est appliquée contre une surface d'étanchéité du rotor, et que la rondelle-ressort (32) prend appui avec son bord extérieur dans le carter de pompe (12) et avec son bord intérieur sur une bague de fixation (42) placée sur la manchette (38) du soufflet (20) qui porte la bague de glissement (30), **caractérisé en ce que** le soufflet en forme de C (20) est fixé dans le carter de pompe (12) de façon rigide à la torsion en tournant le dos au rotor (14) avec une partie creuse (45), objectif pour lequel, d'une part, le segment de fixation cylindrique (22) du soufflet (20) s'étend dans la direction de l'entraînement de la pompe et est immobilisé de façon à être fixe en rotation dans une rainure annulaire (24) du carter de pompe (12) ou entre une bague d'appui séparée (50) et le perçage de passage (16) et, d'autre part, la paroi (28) du soufflet (20) qui s'étend transversalement à l'arbre d'entraînement (18) part, avec la manchette (38) s'étendant également dans la direction de l'entraînement de la pompe, à angle droit du point d'immobilisation du segment de fixation cylindrique (22), puis s'étend verticalement et de façon rectiligne, approximativement dans le plan du carter de pompe (12), et sachant que la surface d'appui (46) pour le bord extérieur (43a) de la rondelle-ressort (40) prenant appui sur la bague de fixation (42 ; 42') est réalisée distincte du soufflet (20), en tant qu'épaulement situé sur le carter de pompe (12) au-dessous de la rainure annulaire (24) ou sur la bague d'appui séparée (50), et **en ce que** la rondelle-ressort (40) exerçant une pression sur la bague de glissement (30) est dentée ou lisse.

2. Dispositif d'étanchéité selon la revendication 1, **caractérisé en ce que** la rondelle-ressort (40) prend appui avec son bord extérieur (43a) sur la surface d'appui (46) en y étant appliquée librement, et **en ce que** la bague de glissement (30) est réalisée munie d'un segment cylindrique (36) plongeant dans la partie creuse du soufflet (45) et la bague de fixation (42 ; 42') est immobilisée de façon à être fixe en rotation, avec le soufflet (20), sur le segment cylindrique (36), en tant que support opposé pour la rondelle-ressort (40).

3. Dispositif d'étanchéité selon les revendications 1 et 2, **caractérisé en ce que** la bague de fixation (42 ; 42') fait corps avec la rondelle-ressort (40) et est réalisée en tant que base centrale cylindrique (42') de cette dernière.

4. Dispositif d'étanchéité selon l'une ou plusieurs des revendications 1 à 3, **caractérisé en ce que** la bague de fixation (42 ; 42') pour la rondelle-ressort (40) est réalisée en tant que pièce séparée.

5. Dispositif d'étanchéité selon l'une ou plusieurs des revendications 1 à 4, **caractérisé en ce que** la bague de fixation (42 ; 42') est de préférence réalisée avec une rainure annulaire circulaire (49) dans laquelle sont logées les surfaces faisant ressort (41 ; 44) de la rondelle-ressort (40).

6. Dispositif d'étanchéité selon l'une ou plusieurs des revendications 1 à 5, **caractérisé en ce que** l'élément faisant ressort (32) réalisé en tant que rondelle-ressort dentée (40) présente un certain nombre de lamelles (44) qui s'étendent du bord extérieur (43a) de la rondelle-ressort (40) vers le milieu de la rondelle-ressort ou de la bague de fixation (42 ; 42') entourant la bague de glissement (30) radialement vers l'extérieur vers la surface d'appui (46 ; 50), les lamelles (44) étant réalisées obliques.

7. Dispositif d'étanchéité selon l'une ou plusieurs des revendications 1 à 6, **caractérisé en ce que**, lorsque les lamelles (44) s'étendent en direction du milieu de la rondelle-ressort, les extrémités des lamelles (44) sont logées librement dans la bague de fixation (42 ; 42') ou font corps avec cette dernière.

8. Dispositif d'étanchéité selon l'une ou plusieurs des revendications 1 à 7, **caractérisé en ce que**, lorsque les lamelles (44) s'étendent en direction du milieu de la rondelle-ressort, les extrémités des lamelles constituent le bord extérieur (43a) de la rondelle-ressort (40) et sont appliquées contre la surface d'appui (46 ; 50).

9. Dispositif d'étanchéité selon l'une ou plusieurs des revendications 1 à 8, **caractérisé en ce que** le soufflet (20) présente un bord (48) s'étendant radialement vers l'intérieur et ménagé sur l'extrémité libre du segment de fixation (22), qui maintient solidement la bague d'appui (50).

10. Dispositif d'étanchéité selon l'une ou plusieurs des revendications 1 à 9, **caractérisé en ce que** les extrémités libres de lamelles (44) prennent appui sur une couronne (56) faisant saillie dans la direction dans laquelle agit la rondelle-ressort (40), qui est réalisée sur une bague d'appui (50) située dans le soufflet (20).

11. Dispositif d'étanchéité selon l'une ou plusieurs des revendications 1 à 10, **caractérisé en ce que** la bague d'appui (50) est en matière plastique.

12. Dispositif d'étanchéité selon l'une ou plusieurs des revendications 1 à 11, **caractérisé en ce que** la bague de glissement (30) est réalisée de façon cylindrique et le segment (36) de la bague de glissement (30) qui plonge dans la partie creuse (45) du soufflet présente un diamètre réduit tel que le segment présentant le plus grand diamètre est appliqué de l'extérieur contre l'ouverture (26) pratiquée dans la paroi verticale (28) du soufflet, sachant que la manchette cylindrique (38) du soufflet (20) orientée axialement dans la direction de l'entraînement de la pompe et prolongeant l'ouverture (26) est étroitement appliquée contre le segment réduit (36) de la bague de glissement (30) et que la bague de fixation (42 ; 42') faisant office d'appui opposé de l'élément faisant ressort (32) entoure la manchette (38) de façon à être fixe en rotation.

13. Dispositif d'étanchéité selon l'une ou plusieurs des revendications 1 à 12, **caractérisé en ce que** le soufflet (20) est composé d'une matière plastique élastomère.

14. Dispositif d'étanchéité selon l'une ou plusieurs des revendications 1 à 13, **caractérisé en ce que** la rondelle-ressort (40) présente une courbe caractéristique d'élasticité linéaire, progressive ou dégressive.
